(19) Europäisches Patentamt
European Patent Office
Office européen des brevets

(11) Publication number: **0 112 406 B1**

(12) # EUROPEAN PATENT SPECIFICATION

(45) Date of publication of patent specification: **18.03.87**

(51) Int. Cl.⁴: **B 32 B 27/08**

(21) Application number: **82112009.4**

(22) Date of filing: **24.12.82**

(54) **Multi-layered hollow container.**

(43) Date of publication of application:
**04.07.84 Bulletin 84/27**

(45) Publication of the grant of the patent:
**18.03.87 Bulletin 87/12**

(84) Designated Contracting States:
**DE FR GB**

(56) References cited:
**EP-A-0 012 434**
**EP-A-0 016 617**

**JAPANESE PATENTS GAZETTE, Section Ch: Chemical, Week D14, unexamined: 9th-15th February 1981, J5, page 7, no. 24132 D/14, Derwent Publications Ltd., London, G.B.**

(73) Proprietor: **Toppan Printing Co., Ltd.**
**5-1, 1-chome, Taito**
**Taito-ku Tokyo (JP)**

(72) Inventor: **Iwasawa, Nobuyuki**
**5-9-20, Hiyoshi Kohoku-ku**
**Yokohama-shi Kanagawa-ken (JP)**
Inventor: **Kazato, Keiji**
**60-1, Isobe**
**Chiba-shi Chiba-ken (JP)**

(74) Representative: **Bühling, Gerhard, Dipl.-Chem. et al**
**Patentanwaltsbüro Tiedtke-Bühling-Kinne Grupe-Pellmann-Grams-Struif Bavariaring 4**
**D-8000 München 2 (DE)**

**EP 0 112 406 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background of the Invention

1. Field of the Invention

The present invention relates to a multilayer container suitable for containing agricultural chemicals, fuel oil and industrial chemicals.

2. Description of the Prior Art

Heretofore, containers made of polyolefins such as polyethylene or polypropylene have been generally used for holding agricultural chemicals, fuel oil and industrial chemicals such as those of aromatic hydrocarbon series or aliphatic hydrocarbon series. These containers, however, are unsatisfactory because they swell or crack after a certain period of time in view of a poor resistance to chemicals so that they cannot be widely used from the viewpoint of safety.

In order to improve the chemical resistance, the use of a resin having good resistance to organic chemicals such as nylon has been proposed. Although an attempt has long been made to produce containers made singly of nylon, those containers have not yet been commercialized because of their various disadvantages and difficulties such as a high cost of nylon, a poor mouldability and poor deep drawing performance owing to the low melt viscosity, and a low fused adhesion strength of the pinch-off portion in the bottom of nylon single layer container leading to an easy separation of the pinch-off portion if the container is dropped.

Therefore, contents such as agricultural chemicals, fuel oil and industrial chemicals have been generally held in metallic cans or glass bottles at the present time. However, disposal of wastes of metallic cans and glass bottles after use thereof has become a social problem. In place of these containers, containers suitable for filling such contents have long been desired.

As the method of coping with those prior art problems, for example, as shown in Japanese Patent Laid-Open Publication No. 53—21675 (1978), the production of a three-layer container having an excellent chemical resistance and mouldability by the multilayer co-extrusion blow moulding method has now been developed and put to practical use. This three-layer container comprises an intermediate layer consisting of an adhesive polyolefin, and an inner layer which is brought into direct contact with liquid contents, consisting of nylon or saponified ethylene-vinyl acetate copolymer having an excellent resistance particularly to organic solvents and so on. These resins, however, do not exhibit an excellent resistance to all liquid contents. For example, nylon is very poor in resistance of phenols, alcohols, strong acids and weak acids. The saponified ethylene-vinyl acetate copolymers have the defect that they do not have a sufficient resistance to solvents having a hydroxyl group as in the case of nylon. Metals are inappropriate for acids, and glass is inappropriate for alkaline hydrates.

A fluorocarbon resin is generally known as a material exhibiting an excellent resistance to all chemicals. The fluorocarbon resin is generally excellent in chemical resistance and has no water absorption properties, and its abrasion resistance, self lubrication and non-tackiness are the best among synthetic resins. Tetrafluoroethylene resin (hereinafter referred to as TFE) is known most among the fluorocarbon resins. TFE has the lowest chemical activity possible as a fluorine-containing polymer, lowest friction, non-tackiness, best dielectric performance, minimum water absorption, highest resistance to high and low temperatures and best weathering property among the fluorocarbon resins. However, TFE does not have a plasticity so as to be molten at its melting point so that its processability is extremely poor. Accordingly, it is processed according to a method similar to that adopted in the field of powder metallurgy so that its use is limited.

Thermoplastic fluorocarbon resins which are extrusion mouldable include ethylene-tetrafluoroethylene alternating copolymer resin (herinafter referred to as ETFE), polyvinylidene fluoride resin (PVDF), polyvinyl fluoride resin (PVF), ethylene-ethylene chloride trifluoride alternating copolymer resin (ECTFE), polyethylene chloride trifluoride resin (PCTFE) and tetrafluoroethylene-hexafluoroethylene alternating copolymer resin (FEP). These resins contain fluorine atoms in their molecular segments so that they exhibit properties similar to those of TFE. Although the fluorocarbon resins have favorable properties, they are very expensive so that their use is restricted to some special fields from economical aspects.

The thermoplastic fluorocarbon resins also have difficulty in laminating with other resins because they generally have significant non-tackiness.

As the method of overcoming those defects as set forth hereinabove, we have disclosed in our copending Japanese Patent Laid-Open Publication No. 56-13337 (1981) the multilayer co-extrusion blow moulding method adapted to produce a container having a favourable chemical resistance, water vapourproof, interlaminar strength and economy in production, the container comprising an inner layer made of a thermoplastic fluorocarbon resin, an intermediate layer made of a polyolefin grafted with an unsaturated glycidyl compound, and an outer layer made of a polyolefin. This method, however, has the defect that it has a poor co-extrusion blow mouldability although the interlaminar strength is satisfactory. In this method, the fluorocarbon resin to be used as the inner layer has a high moulding temperature ranging from 250 to 350°C, so that the melt viscosity of the unsaturated glycidyl graft-modified polyolefin as the intermediate layer to be extruded as a laminate with the fluorocarbon resin decreases remarkably leading to irregularities in wall thickness in the inner and intermediate layers in the circumferential

direction of the resulting container. In some cases, the graft-modified polyolefin for the intermediate layer cannot be filled to form a full intermediate layer resulting in a container wherein the thermoplastic fluorocarbon resin and the polyolefin are locally separated from each other.

EP—A—16617 discloses a multilayer laminated structure which is obtained by a co-extrusion technique and which is composed of a polyethylene composition layer comprising (a) 50 to 97 parts by weight of a high-density polyethylene partially or entirely grafted with an unsaturated carboxylic acid or its derivative (e.g., glycidyl acrylate), (b) 3 to 50 parts by weight of a copolymer of ethylene and 4-methyl-1-pentene having a density of 0.910 to 0.945 g/cm$^3$ (however, the total amount of (a) + (b) is 100 parts by weight) and further, if desired, (c) 20 parts by weight or less of a rubbery polymer, and a polyamide resin layer.

EP—A—12434 discloses an adhesive for a copolymer consisting of tetrafluoroethylene and an α-olefin and, if desired, another monomer in a minor amount. The adhesive contains an elastomeric copolymer consisting of 80 to 55% by mol of vinylidene fluoride units and 20 to 45% by mol of hexafluoropropylene units.

Japanese Patent Gazette (laid-open patent application No. 56—13337) discloses a multlayer container consisting of an inner layer composed of a thermoplastic fluorine containing resin, an intermediate layer composed of a crystalline polyolefin resin grafted with an unsaturated glycidyl compound and an outer layer composed of a polyolefin resin.

## Summary of the Invention

The present invention has been made in consideration of the above drawbacks and has for its object to provide a multilayer container capable of being formed in an economical and cheap manner by the multilayer co-extrusion blow moulding method using a thermosplastic fluorocarbon resin having a good co-extrusion blow mouldability, chemical resistance, water vapourproof and interlaminar strength.

## Detailed Description of the Preferred Embodiments

The multilayer container according to the present invention comprises an inner layer comprising a thermoplastic ethylene-tetrafluoroethylene alternating copolymer resin, an outer layer comprising a polyolefin and an intermediate layer provided between said inner layer and said outer layer, said intermediate layer comprising 30 to 80% by weight of an ethylene-vinyl acetate copolymer grafted with an unsaturated glycidyl compound, 5 to 35% by weight of a rubber and 10 to 50% by weight of a polyolefin.

On page 8, lines 27 and 28 of the above mentioned EP—A—16617, there is a passage "Incorporation of the component (c) often results in a further improvement of adhesive properties (to a polyamide resin)". On the other hand, the use of rubber in the present invention has the effect of improving the melt viscosity of the mixed resin.

The intermediate layer may preferably comprise 50 to 60% by weight of ethylene-vinyl acetate copolymer grafted with an unsaturated glycidyl compound, 15 to 25% by weight of a rubber and 20 to 30% by weight of a polyolefin.

The thermoplastic ethylene-tetrafluoroethylene alternating copolymer resin to be used for the inner layer of the multilayer container according to the present invention is most suitable for accomplishing the objects of the present invention because it has a high resistance to solvents and a good moulding processability.

In accordance with the present invention, the polyolefin to be used as the outer layer of the container may include, for example, high, medium and low density polyethylene, polypropylene and ethylene-propylene copolymer.

When the polyolefin is mixed with an inorganic filler and fibres, thermal resistance, flammability and mechanical strength are improved.

The amount of the inorganic filler or fibres to be used in accordance with the present invention may range from 5 to 90% by weight with respect to 10 to 95% by weight of the polyolefin, preferably from 20 to 60% by weight with respect to 40 to 80% by weight of the polyolefin. The inorganic filler may include, for example, calcium carbonate, aluminum hydroxide, calcium sulfite, talc, gypsum and mica. The fibres may include, for example, inorganic fibres, organic fibres and carbon fibres. Among these fibres, glass fibres are preferred in terms of cost and properties. The average lengths of the glass fibres are in the range from 0.05 to 30 mm, preferably from 0.2 to 15 mm.

The ethylene-vinyl acetate copolymer grafted with the unsaturated glycidyl compound to be used for the intermediate layer according to the present invention may firmly adhere the thermoplastic ethylene-tetrafluoroethylene alternating copolymer resin (ETFE) and the polyolefin together as illustrated hereinabove.

The unsaturated glycidyl compounds may include, for example, glycidyl methacrylate and glycidyl acrylate. These compounds have the following chemical structures:

glycidyl methacrylate:

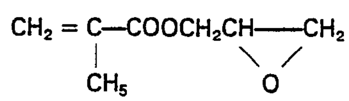

glycidyl acrylate:

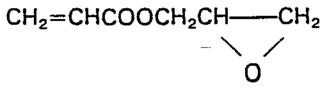

The ethylene-vinyl acetate copolymer may be grafted by mixing it with the unsaturated glycidyl compound as described hereinabove and then subjecting the resulting mixture to radioactive radiation or a reaction in the presence of a peroxide catalyst.

The rubber has the great effect of improving the melt viscosity on the ethylene-vinyl acetate copolymer, grafted with the unsaturated glycidyl compound, and may not decrease the interlaminar strength between the thermoplastic ethylene-tetrafluoroethylene alternating copolymer resin and the polyolefin. The addition of the rubber, however, may cause melt fractures of a multilayer molten parison leading to irregularities in the wall thicknesses of the intermediate layer and the inner layer. In order to improve this property, the polyolefin as illustrated hereinafter is added. With increasing amounts of the polyolefin, mouldability and uniformity in wall thickness of the intermediate layer and the inner layer may be improved; however, interlaminar strength decreases to a remarkable extent. Accordingly, the amounts of the rubber are within the range as defined hereinbefore.

The rubber may include, for example, natural rubber, styrene-butadiene rubber, acrylonitrile-butadiene rubber, butyl rubber, chloroprene type synthetic rubber, acryl rubber, urethane rubber, polybutadiene rubber, ethylene-propylene rubber, ethylene-propylene terpolymer, polyether rubber, polybutene-1 rubber and ethylene-butadiene rubber. Among these rubbers, ethylene-propylene rubber and ethylene-propylene terpolymer are desirable in terms of compatibility with the ethylene-vinyl acetate copolymer grafted with the unsaturated glycidyl compound or with the polyolefin, mouldability and cost.

The polyolefin to be used for the intermediate layer of the container according to the present invention may include, for example, α-olefin homopolymer such as polyethylene or polypropylene, a copolymer of ethylene with other α-olefin such as an ethylene-propylene copolymer, ethylene-butene-1 copolymer or ethylene-hexane-1 copolymer or a crystalline polymer of α-olefins such as propylene-butene-1. These polymers and copolymers may be blended with each other. A high density polyethylene having a low melt index may be preferably used in terms of compatibility with the rubber and the ethylene-vinyl acetate copolymer grafted with the unsaturated glycidyl compound, the effect of decreasing the melt viscosity, and cost.

The three-layer container according to the present invention may be moulded by conventional multilayer extrusion blow moulding method. It is economical to prepare the container so that it has a thin inner layer made of the ETFE and a thick outer layer made of general-purpose polyolefin.

With the container formed so as to have the structure as described hereinabove, the present invention can provide a multilayer container having an excellent chemical resistance obtainable at a cheaper cost than conventional ones and without causing the fluorocarbon (ETFE) to lose its properties as well as having excellent co-extrusion blow mouldability and interlaminar strength due to the use of the resin mixture of the ethylene-vinyl acetate copolymer grafted with the unsaturated glycidyl compound, the rubber and the polyolefin as the intermediate layer between the inner layer made of ETFE and the outer layer made of the polyolefin. With high density polyethylene as the outer layer, a container suitable for containing chemicals having an excellent impact resistance may be provided. The use of polypropylene may provide a container for containing medicines and drugs which may be sterilizable by heat.

## Example 1

Using high density polyethylene (HDPE) having a density of 0.95 and a melt index of 0.3 as the outer layer, a resin mixture of 45% by weight of a graft compolymer obtained by grafting an ethylene-vinyl acetate copolymer having a density of 0.94 and a melt index of 1.8 with glycidyl methacrylate, 20% by weight of ethylene-propylene terpolymer (ethylene content: 70%; propylene content: 15%; and ethylidenenorbornene content: 15%) and 35% by weight of high density polyethylene having a density of 0.955 and a melt index of 0.05 as the intermediate layer, and ethylene-tetrafluoroethylene alternating copolymer resin (ETFE) having a melting point of 270°C and a melt viscosity ranging from $10^3$ to $10^4$ Pa.s ($10^4$ to $10^5$ poise) at temperatures ranging from 300 to 330°C as an inner layer, a three-layer container having a weight of 45 grams and a capacity of 500 $cm^3$ was prepared by a multi-layer co-extrusion blow moulding machine. The outer layer/intermediate layer/inner layer ratio in wall thickness was found to be 7/1/2.

## Example 2

A three-layer container was prepared by using the same materials and following the same procedures as in Example 1 with the exception that a resin mixture of 55% by weight of an ethylene-vinyl acetate copolymer having a density of 0.94 and a melt index of 1.8 grafted with glycidyl methacrylate, 25% by weight of an ethylene-propylene terpolymer (ethylene content: 70%; propylene content: 15%; and ethylidenenorbornene content: 15%) and 20% by weight of high density polyethylene having a density of 0.955 and a melt index of 0.05 was used for the intermediate layer.

Example 3

A three-layer container having a weight of 45 grams and a capacity of 500 $cm^3$ was prepared by using the same materials and following the same procedures as in Example 1 with the exception that a blend of 70% by weight of HDPE of Example 1 with 30% by weight of glass fibres having an average length of 10 mm was used for the outer layer. The outer/intermediate/inner layer ratio in wall thickness was found to be 7/1/2.

Comparative Example 1

A three-layer container was prepared by using the same materials and following the same procedures as in Example 1 with the exception that an ethylene-vinyl acetate copolymer having a density of 0.94 and a melt index of 1.8 grafted with glycidyl methacrylate was used as the intermediate layer. This three-layer container was found to be remarkably irregular in wall thickness in the inner layer and the intermediate layer, and some portions of the intermediate layer were deficient so that its commercial value was found to be insufficient.

Comparative Example 2

A three-layer container was prepared in the same manner as in Example 1 with the exception that a mixture of 70% by weight of an ethylene-vinyl acetate copolymer having a density of 0.94 and melt index of 1.8 grafted with glycidyl methacrylate and 30% by weight of an ethylene-propylene terpolymer (ethylene content: 70%; propylene content: 15%; and ethylidenenorbornene content: 15%) was used for the intermediate layer. This three-layer molten parison caused melt fractures and led to irregularities in wall thickness.

The adhesion strength and the mouldability of the containers are shown in the following table.

| | Adhesion strength*1 (N/15 mm width) | Mouldability*2 |
|---|---|---|
| Example 1 | 1.96—2.94 | ◎ |
| Example 2 | 4.90—6.86 | O |
| Example 3 | 1.96—2.94 | ◎ |
| Comparative Example 1 | 6.86—7.85 | X |
| Comparative Example 2 | 6.86—7.85 | X |

*1) 90° peeling (interlaminar strength between the inner and intermediate layers)

*2) Mouldability: ◎ Excellent
O Good
X Remarkably poor

**Claims**

1. A multilayer container comprising an inner layer comprising a thermoplastic ethylene-tetrafluoroethylene alternating copolymer resin, an outer layer comprising a polyolefin and an intermediate layer provided between said inner layer and said outer layer, characterized in that said intermediate layer comprises 30 to 80% by weight of an ethylene-vinyl acetate copolymer grafted with an unsaturated glycidyl compound, 5 to 35% by weight of a rubber and 10 to 50% by weight of a polyolefin.

2. The multilayer container of claim 1, wherein said rubber is selected from the group consisting of natural rubber, styrene-butadiene rubber, acrylonitrile-butadiene rubber, butyl rubber, chloroprene type synthetic rubber, urethane rubber, polybutadiene rubber, ethylene-propylene rubber, ethylene-propylene terpolymer, polyether rubber, polybutene-1 rubber, and ethylene-butadiene rubber.

3. The multilayer container of claim 1, wherein said intermediate layer comprises 50 to 65% by weight of said ethylene-vinyl acetate copolymer grafted with an unsaturated glycidyl compound, 15 to 25% by weight of said rubber and 20 to 30% by weight of said polyolefin.

4. The multilayer container of claim 1, wherein said outer layer includes inorganic fillers and/or fibres.

**Patentansprüche**

1. Mehrschichtenbehälter mit einer Innenschicht, die ein thermoplastisches alternierendes Ethylen-Tetrafluorethylen-Copolymerharz enthält, einer Außbenschicht, die ein Polyolefin enthält, und einer Zwischenschicht, die zwischen der erwähnten Innenschicht und der erwähnten Außenschicht angeordnet ist, dadurch gekennzeichnet, daß die erwähnte Zwischenschicht 30 bis 80 Masse% eines Ethylen-Vinylacetat-Copolymers, auf das eine ungesättigte Glycidylverbindung aufgepfropft ist, 5 bis 35 Masse% eines Kautschuks und 10 bis 50 Masse% eines Polyolefins enthält.

2. Mehrschichtenbehälter nach Anspruch 1, bei dem der erwähnte Kautschuk aus der Gruppe ausgewählt ist, die aus Naturkautschuk, Styrol-Butadien-Kautschuk, Acrylnitril-Butadien-Kautschuk, Butylkautschuk, Synthesekautschuk des Chloroprentyps, Urethankautschuk, Polybutadienkautschuk, Ethylen-Propylen-Kautschuk, Ethylen-Propylen-Terpolymer, Polyetherkautschuk, Polybuten-1-Kautschuk und Ethylen-Butadien-Kautschuk besteht.

3. Mehrschichtenbehälter nach Anspruch 1, bei dem die erwähnte Zwischenschicht 50 bis 65 Masse% des erwähnten Ethylen-Vinylacetat-Copolymers, auf das eine ungesättigte Glycidylverbindung aufgepfropft ist, 15 bis 25 Masse% des erwähnten Kautschuks und 20 bis 30 Masse% des erwähten Polyolefins enthält.

4. Mehrschictenbehälter nach Anspruch 1, bei dem die erwähnte Außenschicht anorganische Füllstoffe und/oder Fasern enthält.

**Revendications**

1. Récipient multicouches comprenant une couche interne comprenant un résine thermoplastique de copolymère alterné éthylène-tétrafluoréthylène, une couche externe comprenant une polyoléfine et une couche intermédiaire prévue entre ladite couche interne et ladite couche externe, caractérisé en ce que ladite couche intermédiaire comprend 30 à 80% en poids d'un copolymère éthylène-acétate de vinyle greffé avec un composé glycidylique insaturé, 5 à 35% en poids d'un caoutchouc et 10 à 50% en poids d'une polyoléfine.

2. Récipient multicouches de la revendication 1, dans lequel ledit caoutchouc est choisi dans le groupe constitué du caoutchouc naturel, du caoutchouc styrène-butadiène, du caoutchouc acrylonitrile-butadiène, du caoutchouc butyle, d'un caoutchouc synthétique du type chloroprène, du caoutchouc d'uréthane, du caoutchouc de polybutadiène, du caoutchouc éthylène-propylène, d'un terpolymère éthylène-propylène, du caoutchouc de polyéther, du caoutchouc de polybutène-1 et du caoutchouc d'éthylène-butadiène.

3. Récipient multicouches selon la revendication 1, dans lequel ladite couche intermédiaire comprend 50 à 65% en poids dudit copolymère éthylène-acétate de vinyle greffé avec un composé glycidylique insaturé, 15 à 25% en poids dudit caoutchouc et 20 à 30% en poids de ladite polyoléfine.

4. Récipient multicouches selon la revendication 1, dans lequel ladite couche externe contient des charges minérales et/ou des fibres.